# EUROPÄISCHE PATENTANMELDUNG

(11) **EP 0 543 429 A1**
(43) Veröffentlichungstag der Anmeldung: **26.05.1993**
(21) Anmeldenummer: 92203017.6
(22) Anmeldetag: 01.10.1992
(51) Int. Cl.: B01J 8/38, B01J 8/26, F22B 31/00

(54) **Wirbelbettkühler für eine Anlage zum thermischen Behandeln körniger Feststoffe in der Wirbelschicht**

(30) Priorität: 29.10.1991 DE 4135582
(71) Anmelder: METALLGESELLSCHAFT Aktiengesellschaft, D-60015 Frankfurt (DE)
(72) Erfinder: Kral, Rudolf, W-6392 Neu-Anspach (DE); Hirschfelder, Hansjobst, W-6000 Frankfurt am Main 60 (DE)

(57) **Zusammenfassung**

Der Wirbelbettkühler dient zum Kühlen körniger Feststoffe, die in heißem Zustand von einem Abscheider in den Wirbelbettkühler fließen, vom Wirbelbettkühler in eine Wirbelzone zum thermischen Behandeln körniger Feststoffe gelangen und von heißem Gas aus der Wirbelzone zum Abscheider transportiert werden. Der Wirbelbettkühler besitzt eine Einlaufkammer, eine Auslaufkammer mit einer ersten, zur Wirbelzone führenden Auslauföffnung und eine mit der Einlaufkammer in Verbindung stehende Kühlkammer. Die Kühlkammer weist eine zweite, zur Wirbelzone führende Auslauföffnung und eine Kühleinrichtung auf. Die Einlaufkammer, die Auslaufkammer und die Kühlkammer sind mit Zufuhreinrichtungen für Wirbelgas ausgestattet. Die Kühlkammer ist etwa auf gleicher Höhe neben der Einlaufkammer und der Auslaufkammer angeordnet. Zwischen der Einlaufkammer und der Kühlkammer befindet sich eine im wesentlichen senkrechte Wand mit einer Durchlaßöffnung.

## Beschreibung

Die Erfindung betrifft einen Wirbelbettkühler zum Kühlen körniger Feststoffe, die in heißem Zustand von einem Abscheider in den Wirbelbettkühler fließen, vom Wirbelbettkühler in eine Wirbelzone zum thermischen Behandeln körniger Feststoffe gelangen und von heißem Gas aus der Wirbelzone zum Abscheider transportiert werden, dabei besitzt der Wirbelbettkühler eine Einlaufkammer, eine Auslaufkammer mit einer ersten, zur Wirbelzone führenden Auslauföffnung und eine mit der Einlaufkammer in Verbindung stehende Kühlkammer, die eine zweite, zur Wirbelzone führende Auslauföffnung und eine Kühleinrichtung aufweist, wobei die Einlaufkammer, die Auslaufkammer und die Kühlkammer mit Zufuhreinrichtungen für Wirbelgas ausgestattet sind.

Ein Wirbelbettkühler dieser Art ist aus dem US-Patent 4 469 050 bekannt. Hierbei befindet sich die Kühlkammer unter der Einlauf- und Auslaufkammer. Dies erschwert den geregelten Zufluß der Feststoffe von der Einlaufkammer zur Kühlkammer und hat den weiteren Nachteil, daß die ungekühlten Feststoffe aus der Auslaufkammer und die gekühlten Feststoffe aus der Kühlkammer in unterschiedlicher Höhe in die Wirbelzone zurückgeführt werden. Der Erfindung liegt deshalb die Aufgabe zugrunde, einen Wirbelbettkühler auf einfache Weise so auszubilden, daß der Feststoffdurchgang durch die verschiedenen Kammern möglichst wenig behindert und leicht regelbar ist, dazu soll es möglich sein, gekühlte und ungekühlte Feststoffe etwa auf gleicher Höhe in die Wirbelzone zurückführen zu können.

Die Aufgabe wird erfindungsgemäß beim eingangs genannten Wirbelkühler dadurch gelöst, daß die Kühlkammer etwa auf gleicher Höhe neben der Einlaufkammer und der Auslaufkammer angeordnet ist und daß sich zwischen der Einlaufkammer und der Kühlkammer eine im wesentlichen senkrechte Wand mit einer Durchlaßöffnung befindet. Bei dieser Anordnung der Kammern wird es möglich, die erste und die zweite Auslauföffnung im gewünschten, mehr oder weniger großen Abstand und auch auf gleicher Höhe anzuordnen.

Vorteilhafterweise ist die Kühlkammer in der Nähe der Durchlaßöffnung mit einer Zufuhreinrichtung für Wirbelgas ausgerüstet. Die Blasrichtung des Wirbelgases kann hierbei etwa in Richtung auf die Wirbelzone gerichtet sein.

Weitere Einzelheiten der Erfindung werden mit Hilfe der Zeichnung erläutert. Es zeigt:
- Fig. 1: in schematischer Darstellung eine Anlage zur thermischen Behandlung körniger Feststoffe in der zirkulierenden Wirbelschicht mit einem Wirbelbettkühler,
- Fig. 2: einen horizontalen Schnitt entlang der Linie A-A durch den Wirbelbettkühler der Fig. 1 und 3 bis 6,
- Fig. 3: einen senkrechten Schnitt entlang der Linie B-B durch den Wirbelbettkühler der Fig. 1, 2, 5 und 6,
- Fig. 4: einen senkrechten Schnitt entlang der Linie D-D durch den Wirbelbettkühler der Fig. 1, 2, 5 und 6,
- Fig. 5: einen senkrechten Schnitt entlang der Linie E-E durch den Wirbelbettkühler der Fig. 2 bis 4 und
- Fig. 6: einen senkrechten Schnitt entlang der Linie F-F durch den Wirbelbettkühler der Fig. 2 bis 4.

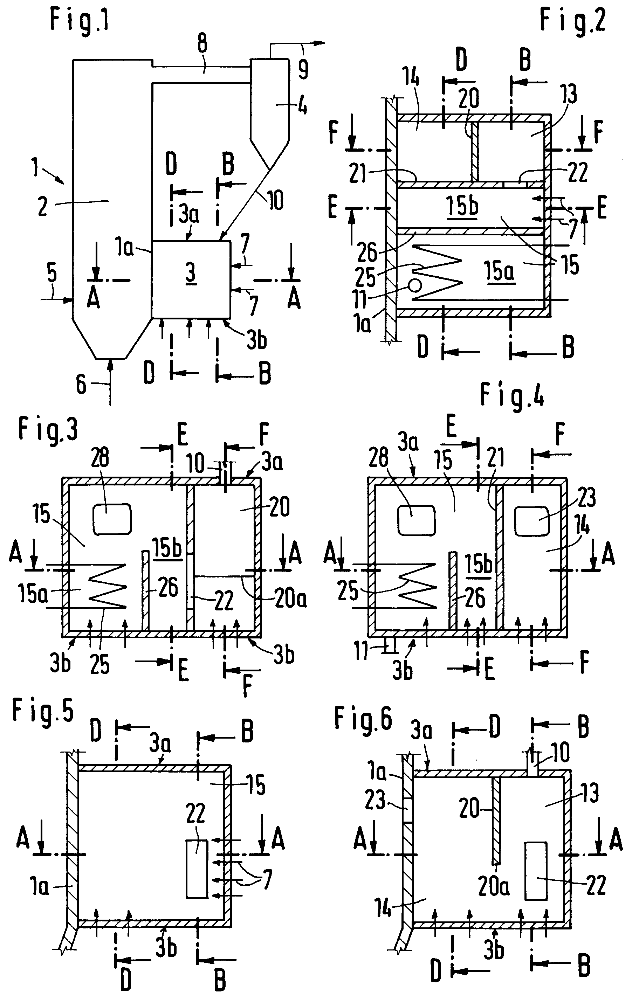

Zur Behandlungsanlage der Fig. 1 mit einem Reaktor (1) mit einer Wirbelzone (2) gehört ein Wirbelbettkühler (3) und ein Abscheider (4), z.B. ein Zyklon. In der Wirbelzone (2) des Reaktors (1) werden körnige Feststoffe thermisch behandelt, die in der Leitung (5) herangeführt werden. Sauerstoffhaltiges Wirbelgas, z.B. Luft, tritt in der Leitung (6) in den Reaktor ein. Bei den in der Leitung (5) dem Reaktor (1) aufgegebenen Feststoffen kann es sich z.B. um Brennstoffe, wie Kohle, Koks oder Braunkohle, sowie um verschiedenartige Abfallstoffe, industrielle oder kommunale Abfälle, oder aber auch um zu röstende Erze handeln. Brennbare Stoffe werden im Reaktor (1) verbrannt oder vergast.

Die bei der thermischen Behandlung in der Wirbelzone (2) aufsteigenden Gase transportieren körnige Feststoffe nach oben, strömen durch den Kanal (8) zum Abscheider (4) und verlassen den Abscheider durch die Leitung (9) zur weiteren Behandlung. Die abgeschiedenen heißen Feststoffe werden in der Leitung (10) zum Wirbelbettkühler (3) geführt.

Durch die Leitung (10) fließen die heißen, körnigen Feststoffe im Wirbelbettkühler zunächst in eine Einlaufkammer (13), vgl. z.B. Fig. 2 und 6. Von hier aus verteilen sich die Feststoffe auf eine Auslaufkammer (14) und eine Kühlkammer (15). Zwischen der Einlaufkammer (13) und der Auslaufkammer (14) besteht eine teilweise Abtrennung (20), die von der Decke (3a) des Wirbelbettkühlers bis etwa zur halben Höhe der beiden Kammern (13) und (14) reicht. Die Unterkante (20a) dieser Abtrennung (20) ist in den Fig. 3 und 6 zu sehen. In der senkrechten Wand (21), welche die Einlaufkammer (13) und die Auslaufkammer (14) von der Kühlkammer (15) abtrennt, befindet sich im Bereich der Einlaufkammer (13) eine torartige Durchlaßöffnung (22), vgl. die Fig. 2, 3, 5 und 6. Um das Hindurchfließen von Feststoffen von der Einlaufkammer (13) durch die Durchlaßöffnung (22) hindurch zur Kühlkammer (14) zu regeln, sind horizontal blasende Düsen (7) vorgesehen, vgl. Fig. 1, 2 und 5, die in an sich bekannter Weise regelbare Gasströme liefern.

Von der Auslaufkammer (14) führt eine erste Auslauföffnung (23), vgl. Fig. 4 und 6, durch die Wand (1a) des Reaktors (1) in die Wirbelzone (2). Die hier hindurchtretenden Feststoffe werden im allgemeinen im Wirbelbettkühler (3) nicht, vor allem nicht nennenswert, gekühlt. Die Kammern (13) und (14) besitzen jedoch am Boden (3b) angeordnete Wirbeldüsen für die Zufuhr von Wirbelgas, z.B. Luft, um den Fluß der Feststoffe in den Kammern in Gang zu halten.

Die Kühlkammer (15), die neben der Einlaufkammer (13) und der Auslaufkammer (14) angeordnet ist, weist eine schematisch angedeutete Kühleinrichtung (25) für die indirekte Kühlung der Feststoffe auf, durch welche man ein flüssiges oder gasförmiges Kühlfluid zur Wärmeabfuhr leitet. Es kann zweckmäßig sein, die Kühlkammer (15) durch eine etwa halbhohe Zwischenwand (26) zu unterteilen, die in Fig. 2 bis 4 sichtbar ist. Hierdurch wird ein Kühlbereich (15a), in welchem sich die Kühleinrichtung (25) befindet, teilweise von einem nicht gekühlten Bereich (15b) abgeteilt. Der nicht gekühlte Bereich (15b) befindet sich neben der Wand (21) und der Durchlaßöffnung (22), so daß hier die freie Bewegung der Feststoffe nicht durch Kühleinrichtungen behindert ist.

Gekühlte Feststoffe gelangen durch die zweite Auslauföffnung (28), die sich ebenfalls in der Reaktorwand (1a) befindet, vgl. Fig. 3 und 4, in die Wirbelzone (2). Einen Überschuß an Feststoffen kann man aus der Kühlkammer (15) durch die Leitung (11) abziehen, vgl. Fig. 2 und 4. Der Boden (3b) der Kühlkammer (15) ist ebenfalls mit Düsen für die Zufuhr von Wirbelgas ausgerüstet. Dabei kann es sich empfehlen, den Boden im nicht gekühlten Bereich (15b) in der Nähe der Durchlaßöffnung (22) von Düsen mit aufwärts gerichtetem Gasstrom freizuhalten und dort nur die horizontal blasenden Düsen (7) vorzusehen. In nicht dargestellter Weise können Gaszufuhrdüsen der verschiedenen Kammern getrennt regelbar ausgebildet sein, wie es an sich bekannt ist.

## Patentansprüche

1. Wirbelbettkühler zum Kühlen körniger Feststoffe, die in heißem Zustand von einem Abscheider in den Wirbelbettkühler fließen, vom Wirbelbettkühler in eine Wirbelzone zum thermischen Behandeln körniger Feststoffe gelangen und von heißem Gas aus der Wirbelzone zum Abscheider transportiert werden, dabei besitzt der Wirbelbettkühler eine Einlaufkammer, eine Auslaufkammer mit einer ersten, zur Wirbelzone führenden Auslauföffnung und eine mit der Einlaufkammer in Verbindung stehende Kühlkammer, die eine zweite, zur Wirbelzone führende Auslauföffnung und eine Kühleinrichtung aufweist, wobei die Einlaufkammer, die Auslaufkammer und die Kühlkammer mit Zufuhreinrichtungen für Wirbelgas ausgestattet sind, dadurch gekennzeichnet, daß die Kühlkammer etwa auf gleicher Höhe neben der Einlaufkammer und der Auslaufkammer angeordnet ist und daß sich zwischen der Einlaufkammer und der Kühlkammer eine im wesentlichen senkrechte Wand mit einer Durchlaßöffnung befindet.

2. Wirbelbettkühler nach Anspruch 1, dadurch gekennzeichnet, daß die Kühlkammer in der Nähe der Durchlaßöffnung eine Zufuhreinrichtung für Wirbelgas aufweist.

3. Wirbelbettkühler nach Anspruch 1 oder 2, dadurch gekennzeichnet, daß die Kühlkammer in der Nähe der Durchlaßöffnung einen von Kühleinrichtungen freien Bereich aufweist.
